# EUROPEAN PATENT SPECIFICATION

(11) **EP 2 884 377 B1**
(45) Date of publication and mention of the grant of the patent: **02.08.2017**
(21) Application number: 13827595.3
(22) Date of filing: 13.05.2013
(51) Int. Cl.: G06F 3/0482, G06F 3/048, G06F 3/0481, G06F 17/30

(54) **INFORMATION PROCESSING DEVICE AND RECORDING MEDIUM**
INFORMATIONSVERARBEITUNGSVORRICHTUNG UND AUFZEICHNUNGSMEDIUM
DISPOSITIF DE TRAITEMENT D'INFORMATIONS ET SUPPORT D'ENREGISTREMENT

(30) Priority: 08.08.2012 JP 2012176152
(43) Date of publication of application: 17.06.2015
(73) Proprietor: Sony Corporation, Tokyo 108-0075 (JP)
(72) Inventor: CHATANI, Masayuki, Tokyo 108-0075 (JP); SAKAMOTO, Ryota, Tokyo 108-0075 (JP); ENAMI, Toshiaki, Tokyo 108-0075 (JP); KURATA, Yoshinori, Tokyo 108-0075 (JP); SASAKI, Makoto, Tokyo 108-0075 (JP); OKUDA, Shizue, Tokyo 108-0075 (JP); SAWAI, Kunihito, Tokyo 108-0075 (JP)
(74) Representative: MFG Patentanwälte Meyer-Wildhagen Meggle-Freund Gerhard PartG mbB
(86) International application number: PCT/JP2013/063315
(87) International publication number: WO 2014/024533

(56) References cited:
- WO-A1-2010/056483
- WO-A1-2010/056483
- JP-A- H11 212 991
- JP-A- H11 212 991
- JP-A- 2011 048 667
- JP-A- 2011 048 667
- JP-A- 2011 107 823
- JP-A- 2011 107 823
- US-A1- 2011 314 421

## Description

### Technical Field

The present disclosure relates to an information processing apparatus and a recording medium.

### Background Art

In accordance with the generalization and high functionality of information processing terminals, a user performs various processes for various types of information via a terminal apparatus. For example, a user browses Web pages by using a browser, communicates with other users by e-mail or the like, and reproduces content such as music or videos by using a player application.

Within these, operation methods of a terminal apparatus utilizing a Graphical User Interface (GUI) have been variously proposed, so that a user can easily and separately use various types of functions capable of being executed by the terminal apparatus. For example, technology is described, in US 6313853-B, which sets a plurality of reactive regions on a screen, and causes an operation such as the transmission of messages to be executed, by a user moving an icon to one of the reaction regions.

WO 2010/056483 A1 discloses a method and system for providing context dependent pop-up menu icons that activate menu icons in response to a select & drag operation by manipulation of a pointing device. Presented icons may correspond to functions or actions that can be implemented with the particular type of content selected. Icons may be displayed in a consistent manner in terms of position and content with respect to the selected file or object. Icons may appear only during a select & drag operation, thereby leaving the display uncluttered at other times. Presentation of icons may be discontinued when the selected file or object is dragged beyond the area of the presented icons. New applications can register with the operating system to specify icons to be presented when corresponding files are selected or when particular content objects are selected within the application.

JP 2011 107823 A discloses that a display controller is provided with: a detection means for detecting a touch input to a display device; a display control means for, when the touch input to designate a display item displayed at the display device is detected by the detection means, controlling the display device to display a plurality of menu items related with the display item designated by the touch input by arranging them like a circular arc with the touch position of the touch input lying inside at the position based on the touch position; and a processing means for, when the touch input to designate one menu item from among the plurality of menu items displayed by the display control means is detected by the detection means, executing processing corresponding to the designated menu item. Therefore, the circular-arc shaped menu items are displayed at the positions with equal distances from the current touch position even though which processing menu item is selected.

JP H11 212991 A discloses that an image that is shown as an initial main image is set to a main image displaying part and also, images that are shown as an initial sub image are set to a sub image displaying part. The image set to the part is shown in a main image display area and also, the images set to the part are shown in a subimage display area, a desired image is selected from sub images in the area and the selected sub image is made a new main image in the area. The sub-images are updated according to the new main image. Thus, it is possible to search for a favorite image among images that are not anticipated by a user.

JP 2011 048667 A discloses that in a recommend server connected through a network to a PC, a recommended merchandise storage part stores merchandise ID to identify merchandise and the merchandise ID of recommended merchandise corresponding to the merchandise in association, and a merchandise information storage part stores the merchandise ID and merchandise relevant information in association, and a transmission/reception part receives a recommendation request including the merchandise ID and display conditions transmitted from the PC, and the recommended merchandise acquisition part obtains the merchandise ID of the recommended merchandise corresponding to the merchandise ID from the recommended merchandise storage part, and a display merchandise information generation part obtains the merchandise relevant information corresponding to the merchandise ID of the recommended merchandise from the merchandise information storage part, and generates the display merchandise information corresponding to display conditions based on the merchandise ID of the recommended merchandise and the merchandise relevant information, and transmits the information to the PC.

### Summary of Invention

### Technical Problem

However, in recent years, the processes which are capable of being executed by using a terminal apparatus have been increasing more and more. For example, in addition to the above described process, the cases have been increasing which are capable of being executed by a coordination operation between devices, such as performing control of another apparatus from the terminal apparatus or transmitting content to another apparatus, by standard establishment or the like for coordination between terminal apparatuses (for example, coordination between a Personal Computer (PC) and a television, recorder, mobile apparatus or the like).

In this way, it has been sought after to easily perform the execution of suitable functions for content in a terminal apparatus, while the functions provided to a user by the terminal apparatus become more and more diverse.

### Solution to Problem

According to the present disclosure, there is provided an information processing apparatus including a function search section which searches for a function capable of being executed for specified content, from a function group including a function capable of being executed in the case where content has a specific attribute or detail, a display control section which causes content icons showing the content to be displayed on a display section, and in the case where one of the content icons is selected by a user, the display control section causes a function icon group corresponding to the function group to be displayed in a first region on the display section, and causes a function icon to be enabled and displayed, from among the function icon group, which corresponds to a function capable of being executed for content corresponding to the selected content icon, and a function execution control section which causes a function to be executed which corresponds to the function icon for content corresponding to the selected content icon in accordance with a position relation between the selected content icon and the enabled and displayed function icon on the display section.

According to the present disclosure, there is provided a recording medium having a program recorded thereon, the program causing a computer to execute a procedure which searches for a function capable of being executed for specified content, from a function group including a function capable of being executed in the case where content has a specific attribute or detail, a procedure which causes content icons showing the content to be displayed on a display section, and in the case where one of the content icons is selected by a user, causes a function icon group corresponding to the function group to be displayed in a first region on the display section, and causes a function icon to be enabled and displayed, from among the function icon group, which corresponds to a function capable of being executed for content corresponding to the selected content icon, and a procedure which causes a function to be executed which corresponds to the function icon for content corresponding to the selected content icon in accordance with a position relation between the selected content icon and the enabled and displayed function icon on the display section.

By searching for functions capable of being executed for specified content, and displaying them differentiated with other functions not capable of being executed at the time when the functions which have been found are displayed as function icons, a user can easily recognize the various types of functions capable of being executed. Further, by executing the functions shown by the function icons in accordance with a position relation between the function icons displayed in such a way and content icons, a user can easily perform an operation which causes a desired function to be executed.

### Advantageous Effects of Invention

According to an embodiment of the present disclosure such as described above, the execution of suitable functions for content in a terminal apparatus can be easily performed.

### Brief Description of Drawings

[FIG. 1] FIG. 1 is a block diagram which shows a schematic functional configuration of a terminal apparatus according to a first embodiment of the present disclosure.
[FIG. 2] FIG. 2 is a first example of a display screen of the terminal apparatus according to the first embodiment of the present disclosure.
[FIG. 3] FIG. 3 is a second example of a display screen of the terminal apparatus according to the first embodiment of the present disclosure.
[FIG. 4] FIG. 4 is a third example of a display screen of the terminal apparatus according to the first embodiment of the present disclosure.
[FIG. 5] FIG. 5 is a flow chart which shows an example of a content search process in the first embodiment of the present disclosure.
[FIG. 6] FIG. 6 is a flow chart which shows an example of a function execution process in the first embodiment of the present disclosure.
[FIG. 7] FIG. 7 is a block diagram which shows a schematic functional configuration of a system according to a second embodiment of the present disclosure.
[FIG. 8] FIG. 8 is a block diagram for describing a hardware configuration of an information processing apparatus.

### Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

Note that, the description will be given in the following order.
1. First embodiment
   1-1. Functional configuration
   1-2. Example of the GUI
   1-3. Example of the process flow
   1-4. Conclusion
2. Second embodiment
3. Hardware configuration
4. Supplementary Explanation

### 1. First Embodiment

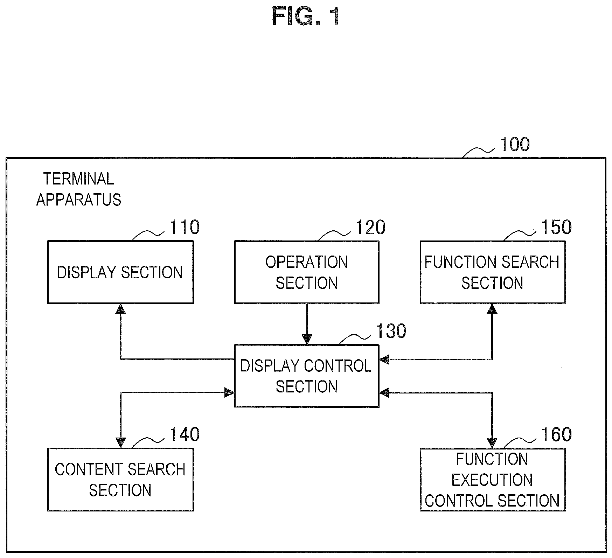

First, a first embodiment of the present disclosure will be described by referring to FIG. 1 to FIG. 6.

### (1-1. Functional configuration)

FIG. 1 is a block diagram which shows a schematic functional configuration of a terminal apparatus according to the first embodiment of the present disclosure. The terminal apparatus 100 includes, as a functional configuration, a display section 110, an operation section 120, a display control section 130, a content search section 140, a function search section 150, and a function execution control section 160. The terminal apparatus 100 is, for example, an apparatus such as various types of PCs such as a tablet type, a notebook type or a desktop type, a mobile phone (including a smart phone), a media player or a game device, and may be implemented, for example, by using a hardware configuration of an information processing apparatus, which will be described later.

The display section 110 is implemented, for example, by a display apparatus such as a Liquid Crystal Display (LCD) or an organic Electro-Luminescence (EL) display. The display section 110 displays various types of information aimed at a user of the terminal apparatus 100, in accordance with a control of the display control section 130. For example, in addition to content such as Web pages, images and videos, a GUI for a user to execute operations related to the content is included in the displayed information.

The operation section 120 is implemented, for example, by including a touch panel, a mouse, a track ball or a pointing device such as a pen tablet. The operation section 120 acquires an operation of a user for the GUI displayed on the display section 110. The acquired operation may be, for example, an operation in which a user selects an icon displayed as the GUI, or an operation in which a user causes an icon to be moved.

The display control section 130 is implemented by a processor such as a Central Processing Unit (CPU) or a Graphical Processing Unit (GPU), and controls a display of the display section 110. As will be described later, the display control section 130 causes a number of types of icons to be displayed as the GUI. Further, the display control section 130 acquires an operation from the operation section 120 in which a user selects an icon to be displayed and causes it to be moved, causes the display of the GUI to be changed in accordance with this operation, and causes some function to be executed in the terminal apparatus 100. At this time, the display control section 130 may request a search of content to be newly displayed to the content search section 140, may request a search of functions capable of being executed to the function search section 150, and may request the execution of a function to the function execution control section 160.

The content search section 140 is implemented by a processor such as a CPU, and searches for content to be presented to a user, by receiving a request of the display control section 130. The content search section 140 may search for content on a network by using a communication apparatus of the terminal apparatus 100, or may search for content stored in a storage apparatus or the like of the terminal apparatus 100. The content may be anything if it provides some information (characters, an image, a video or the like) to a user, such as a Web page, a video or an image. Further, the content search section 140 may search for content by referring to relationship definition information which defines a relationship of attributes or details of the content. Note that, an example of searching of content using a relationship will be described later.

The function search section 150 is implemented by a processor such as a CPU, and searches for functions capable of being executed for the content in the terminal apparatus 100, by receiving a request of the display control section 130. The functions to be searched for may include, for example, access to a service provided on a network related to the content (access to an online store, a catalogue site or the like), transmission to another user of the content (transmission using e-mail or the like, sharing by a social network service or the like), reproduction of content by the terminal apparatus 100, control of another apparatus which coordinates with the terminal apparatus 100 or the like.

Here, the functions capable of being executed for the content will be different in accordance with the attributes or details of the content. For example, if there is content related to a product, it will be possible to access to an online store or a catalogue site. Further, for example, if there is content introducing a television program, it will be possible to request a recording reservation to a recorder which coordinates with the terminal apparatus 100. Accordingly, the function search section 150 searches for functions capable of being executed for the content specified as a target of the search, from among a function group capable of being executed generally for content by the terminal apparatus 100.

The function execution control section 160 is implemented by a processor such a CPU, and executes a function selected by an instruction of a user acquired by the operation section 120, from among the functions searched for by the function search section 150. For example, in the case where a selected function is the acquisition of content on a network, the function execution control section 160 performs access to content on a network by using a communication apparatus of the terminal apparatus 100. Further, in the case where the selected function is the control of another apparatus which coordinates with the terminal apparatus 100, the function execution control section 160 transmits control signals or the like to this apparatus by using a communication apparatus.

### (1-2. Example of the GUI)

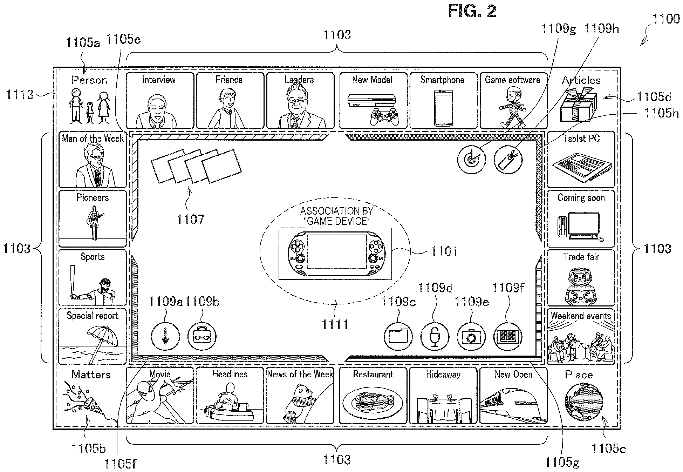

FIG. 2 is a first example of a display screen of the terminal apparatus according to the first embodiment of the present disclosure. A seed content icon 1101, associated content icons 1103, content category displays 1105, a content history display 1107, and operation icons 1109 are displayed on a display screen 1100.

### ("Association" between content)

The two types of content icons of the seed content icon 1101 and the associated content icons 1103 are displayed on the display screen 1100. The associated content icons 1103 are icons which show "associated" content from the content (seed content) displayed as the seed content icon 1101.

Here, "associating" is a term which corresponds to the content search section 140 of the terminal apparatus 100 searching for content by using relationship definition information which defines a relationship of attributes or details of the content. The associated content icons 1103 are icons which display content (associated content) found by the content search section 140 by using the relationship definition information, from attributes or details of the seed content.

In the illustrated example, an icon which shows a game device is displayed as the seed content icon 1101. In this case, the seed content is "product information of the game device", for example. The content search section 140 searches for associated content, such as "game software capable of being played by the game device", "latest model of a series of the same game device", "other products (smart phone or tablet PC) released from the same maker as the game device", "review article of the game device published in a magazine" or "interview article of the developer of the game device", for example, for this seed content. Such content which has been found is displayed as the associated content icons 1103.

### (The relationship definition information)

Such a search of content may include a more advanced process than that of simply using text included in the content for a keyword of the search, or searching for other content to which the types or attributes of content are common (of course, these processes may be included in addition to this). For example, in the case where the content is "product information of the game device", information such as the "name of the game device", the "maker name" and the "release date" is included in the content as text, or is attached as meta-information. Hereinafter, this information will be called "information which shows attributes or details of the content".

On the other hand, relationship definition information referred to by the content search section 140 in the search of content in the present embodiment may be information, for example, which shows a relationship between attributes or details of the content. For example, in the case where there is the "maker name" as the attributes or details of the content, the "maker name" and the "Company President of the maker" may be associated by the relationship definition information. Further, for example, information which shows dates such as the "release date" may be mutually associated in the relationship definition information, and it is possible to search for other products released after the release date of the product, events occurring near the release date of the product or the like.

For example, the relationship definition information is generated by studying the history for which a user has browsed content. In terms of the above described examples of the "maker name" and the "Company President of the maker", in the case where there are many users who are recommending to browse to a page which introduces the Company President from some page related to the maker, it is determined that the relationship between the maker and the Company President is strong, and these are associated in the relationship definition information. Further, as in the above described example of the release date, the relationship definition information may be generated in accordance with a quantitative indicator (for example, other than a date, it may be a character number, access number, number of images, file size or the like) included in the attributes or details of the content. The relationship definition information may be used, for example, as meta-information corresponding to each content. The relationship definition information may be attached to files or the like of the content itself, or may be stored in a database related to an ID, a Uniform Resource Locator (URL) or the like which identifies the content.

The relationship definition information may be common for all users, may be generated for each user category in which users are classified by some standard, or may be personalized for individual users. For example, it is possible for likes and tastes, gender, age or the like of users to be used as a standard of the classification of user categories. By personalizing the relationship definition information for each user generated for each user category, associated content can be searched for by using the relationship definition information nearest to the relationship between attributes or details of the content recognized by each of the users.

For example, if the user is a businessman, there is a high possibility for recognizing a relationship with the "Company President of the maker" or a "former well-known manager" from the "maker name". On the other hand, if the user is a child, there is a high possibility for recognizing a relationship between the "maker name" and the "latest game device" or the "released game software". If respectively appropriate relationship definition information is used between these users, content with a higher possibility of becoming a target of interest for the respective users can be presented as associated content.

Further, in the case where the relationship definition information is personalized, the relationship can be defined based on a personalized relationship of users (a friend relationship or the like). As an example of a relationship based on a personalized relationship of users, in the case where the seed content is a "game device", a "friend who has this game device", a "game the friend has an interest in" or the like may be searched for as associated content. At this time, the associated content to be searched for may include content which is capable of being accessed by users according to a personalized relationship, for example, profiles or contributions released to the public which are limited to friends in a social network service.

The relationship definition information may be stored inside the terminal apparatus 100, or may be stored in a server on a network. In the case where the relationship definition information is stored in a server, the content search section 140 accesses the relationship definition information by using a communication apparatus of the terminal apparatus 100.

For example, in the case where relationship definition information is stored in a server, for example, the relationship definition information can be generated based on a study from the browsing history of many users, and it becomes easy for the relationship definition information to approach the actual "association" of the users. The generation of the relationship definition information may be executed by the server, and the generated information may be copied to the terminal apparatus 100. Further, if a definition of the relationship at the time when content on a network newly emerges is automatically executed by the server, for example, it is possible to promptly search for associated content, at the time when a user sets this content to the seed content.

On the other hand, in the case where the relationship definition information is stored in the terminal apparatus 100, for example, it becomes easy for the details of the content (local content) stored in the terminal apparatus 100 to be reflected in the relationship definition information. The local content may be referred to in the case where the relationship definition information is generated by the server. Further, in the case of performing an "association" of content limited to the local content, if the relationship definition information is stored in the terminal apparatus 100, network communication may not be necessary.

### (The display of content icons)

In the present embodiment, the associated content icons 1103 are displayed by classifying into categories. In the illustrated example, the associated content icons 1103 are classified into the four categories of "Person (people; classified by content related to people, such as interview articles and profiles)", "Matters (matters; classified by content related to matters, such as news)", "Articles (things; classified by content related to things, such as product information)", and "Place (places; classified by content related to places, such as spots and events)". The categories classified in the case of displaying content as the associated content icons 1103 may also be defined as one of the relationship definition information, for example.

Here, the classification of categories may be uniquely determined for each content, or may change for each individual user according to the attributes of the user (for example, likes and tastes, gender, age or the like). For example, news of a new product release may be classified into the category of "Articles" for some user (for example, a user with a high possibility of purchasing this product), and may be classified into the category of "Matters" for another user (for example, a user with a low possibility of purchasing this product, but who has an interest in the achievements of the maker).

The respective categories of the associated content icons 1103 are shown, on the display screen 1100, by the content category displays 1105. In the illustrated example, category icons 1105a to d and category display lines 1105e-1105h are displayed as the content category displays 1105. For example, the category display line 1105e is displayed along the associated content icons 1103 classified into the category of "Person" shown by the category icon 1105a displayed on the top left corner of the display screen 1100. Further, the category display line 1105f is displayed along the associated content icons 1103 classified into the category of "Matters" shown by the category icon 1105b displayed on the bottom left corner.

In the illustrated example, the seed content icon 1101 is displayed in the seed region 1111 near the center of the screen, and the associated content icons 1103 are displayed in the associated region 1113 which is positioned around the seed region 1111. By dragging an associated content icon 1103 from the associated region 1113 up to the seed region 1111, it is possible to set the associated content shown by this icon to new seed content. In this case, the seed content icon 1101 displayed up to here is moved to the content history display 1107, and the display of the associated content icon 1103 is updated to the icon corresponding to the newly found associated content.

That is, by having a user drag the associated content icons 1103 one after another to the seed region 1111, on the display screen 1100, it is possible to mutually browse content related to the "association" one by one. By suitably generating the above described relationship definition information and providing a GUI such as that of the illustrated example, for example, a user can easily access the content which is "most like it at this time".

### (Other functions)

As described above, the content history display 1107 displays an icon which shows content previously displayed as the seed content icon 1101. The number of displayed history is arbitrarily set regardless of the illustrated example. When a content icon displayed as the content history display 1107 is selected, for example, this content is displayed again as the seed content icon 1101, and the associated content icons 1103 also return to the display at this time.

In addition, operation icons 1109a to 1109h are displayed on the display screen 1100. The operation icon 1109a is an automatic selection button of the seed content. When this button is pressed, content selected at random is set to the seed content and is displayed as the seed content icon 1101, and the "associated" content from this content is displayed as the associated content icons 1103. In this case, for example, the seed content may be selected completely at random, may be selected from among a content group set in accordance with attributes of a user (for example, likes and tastes, gender, age or the like), or may be selected from among the content browsing history of a user.

The operation icon 1109b is a setting button. When this button is pressed, a setting screen can be opened for an application displaying the display screen 1100.

The operation icon 1109c is a content selection button. When this button is pressed, for example, a screen can be opened for selecting local content stored in the terminal apparatus 100, or content stored in a storage on a network used by a user, and content which is to be set to the seed content, for example, can be selected from this.

The operation icon 1109d is an audio input button. When this button is pressed, for example, audio input is acquired for setting the seed content, from a microphone of the terminal apparatus 100. In this case, when performing a setting of the seed content, for example, words and phrases read out by a user may be used as keywords by voice recognition, or original music may be searched for by recognizing audio such as streaming music.

The operation icon 1109e is an image input button. When this button is pressed, for example, a camera of the terminal apparatus 100 is started, and an image is acquired for setting the seed content. In this case, content which shows a photographic subject may be used for the seed content, for example, by image-recognizing a photographic subject of an image captured by a user using the camera. Further, content shown by a code may be used for the seed content, by decoding a code such as a captured two-dimensional code.

The operation icon 1109f is a keyboard input button. When this button is pressed, for example, a text input column is displayed, and it becomes possible for text input by a keyboard of the terminal apparatus 100 as an input apparatus, a software keyboard displayed on the display section 110 or the like. In this case, the seed content may be set, for example, by using the input text as a keyword of a search.

The operation icon 1109g is a tracking button. When this button is pressed, for example, content displayed as the seed content icon 1101 at this time is tracked. For example, if the seed content is release information of a product, information such as the determination of a release date of this product or an update notification of software may be automatically acquired. Further, content related to the tracked content may be preferentially displayed as an associated content icon 1103, at the time of a search of the associated content thereafter.

The operation icon 1109h is a bookmark button. When this button is pressed, for example, the seed content, associated content and content history at this time are saved. The saved destination may be the terminal apparatus 100 or may be a server on a network. In the case where the saved destination is a server on a network, for example, in the case where a service is used by another terminal apparatus by having a user use the same user account, browsing of the content can be re-opened from a state of the association at this time.

### (Display of the function icons)

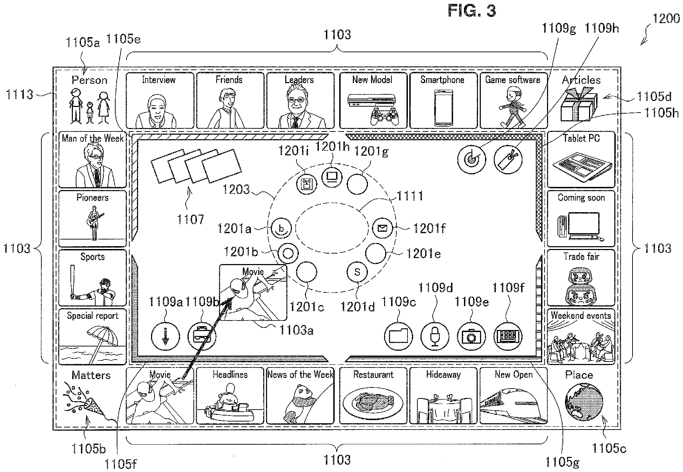

FIG. 3 is a second example of a display screen of the terminal apparatus according to the first embodiment of the present disclosure. In addition to the elements displayed in the above described first example, function icons 1201a to 1201i are displayed on a display screen 1200.

The function icons 1201 are displayed in a function region 1203, at the time when an associated content icon 1103 or the seed content icon 1101 is dragged up to the function region 1203 positioned between the seed region 1111 and the associated region 1113. The function icons 1201 show the functions capable of being executed for the content displayed as the content icon on the display screen 1200.

In the illustrated example, the function icons 1201 are displayed, by having an associated content icon 1103a showing the content of "Movie" (movie) dragged up to the function region 1203. At this time, the function icons 1201 show the functions capable of being executed for the selected content icon, here, the content (for example, promotion content of the movie; hereinafter, simply called "selected content") corresponding to the associated content icon 1103a, from among the functions capable of being executed by the terminal apparatus 100.

More specifically, the function icons 1201a, 1201b, 1201d, 1201f, 1201h and 1201i corresponding to the functions capable of being executed for the selected content are enabled and displayed (icons are displayed within circles), from among the function icons 1201. On the other hand, the function icons 1201c, 1201e and 1201g corresponding to the functions not capable of being executed for the selected content, even though they are capable of being executed by the terminal apparatus 100, are disabled and displayed (icons are not displayed within circles), from among the function icons 1201. The functions that are displayed disabled may be enabled, for example, in the case where a content icon showing a different type of content is selected. That is, the function icons 1201 may show, as a whole, a function group capable of being executed generally for the content by the terminal apparatus 100.

In this way, by having the functions capable of being executed for the selected content visually differentiated and displayed, a user can easily recognize what can be performed for the selected content. When a user ends the dragging of icons in a state in which an associated content icon 1103 is superimposed on any of the enabled and displayed function icons 1201a, 1201b, 1201d, 1201f, 1201h and 1201i, the function corresponding to this function icon 1201 may be executed for the selected content.

### (Example of the functions)

Here, an example of the functions which may be displayed as the function icons 1201 will be described. In the illustrated example, the function icon 1201a is a link to an online store. For example, in the case where the selected content is some promotion content, by having a content icon superimposed on the function icon 1201a, for example, it can move to an online store which sells products which become a target of the promotion (specifically, for example, jumping to a page of the results in which online stores are found by a keyword such as the content name). Similarly, the function icon 1201b is link to a content distribution site, and by having a content icon superimposed on the function icon 1201b, it can move to a page which distributes the content.

The function icon 1201d shows sharing by a social network service. For example, by having a content icon superimposed on the function icon 1201d, content can be shared by a social network service. For example, if the content is content publically released on a network, a link of this content may be shared. Further, if the content is local content or content not publically released on a network (where copyright or the like is present), a link of promotion content or the like of this content may instead be shared. Similarly, the function icon 1201f shows transmission by e-mail, and by having a content icon superimposed on the function icon 1201f, sharing can be performed by transmitting content (or an address of content or the like) to a recipient of an e-mail.

Further, an icon showing a social network service such as the function icon 1201d may operate differently in accordance with the type of the selected content. For example, in the case where the selected content is a contribution of a friend in a social network service, by having a content icon superimposed on the function icon 1201d, a screen to comment on the contribution of the friend in the social network service may be opened. Such a switching of functions is capable of being implemented, for example, by having the function execution control section of the terminal apparatus 100 select functions corresponding to each of the function icons 1201 in accordance with the type of the selected content icon.

The function icon 1201h shows transmission to a television. For example, by having a content icon superimposed on the function icon 1201h, content can be caused to be displayed on a television connected to the terminal apparatus 100 via a network. Further, the function icon 1201i shows transmission to a recorder. For example, by having a content icon superimposed on the function icon 1201i, a recording reservation of a program related to the content can be requested to a recorder connected to the terminal apparatus 100 via a network. In this case, for example, if the content icon is information of a television program, a recording reservation of this program is requested. Further, for example, if the content icon is content related to another television program, searching for and reserving a program related to a theme or keyword of the content from a program guide can be requested.

In this way, the functions which may be displayed as the function icons 1201 are wide ranging. It is needless to say that the examples of the functions are not limited to those described above, and may include various types of functions, for example, which may be generally displayed as icons in a GUI. The function icons 1201 may be displayed as a group, so that a user easily recognizes the types of corresponding functions. In the illustrated example, the function icons 1201a to 1201c are a function group related to "obtaining of content", the function icons 1201d to 1201f are a function group related to "sharing of content", and the function icons 1201g to 1201i are a function group related to "device coordination functions".

For example, in the case of the function group related to "obtaining of content" or "sharing of content", the function search section 150 may preferentially select access to an online store, a content distribution site, a social network service or the like, on which a user holds an account, as a function to be displayed as a function icon 1201. Further, the function search section 150 may cause it to be displayed as a function icon 1201, by preferentially selecting that in which the usage frequency of a user is particularly high from among these.

On the other hand, in the case of the function group related to "device coordination functions", the function search section 150 may recognize a device held by a user registered in advance, or a device discovered by searching a home network, and may cause a function capable of being executed by coordination between these devices to be displayed as a function icon 1201. At this time, the function search section 150 may cause it to be displayed as a function icon 1201, by preferentially selecting a function in which the usage frequency of the user is high, or a function capable of being immediately executed for a device already set.

### (Content detailed screen)

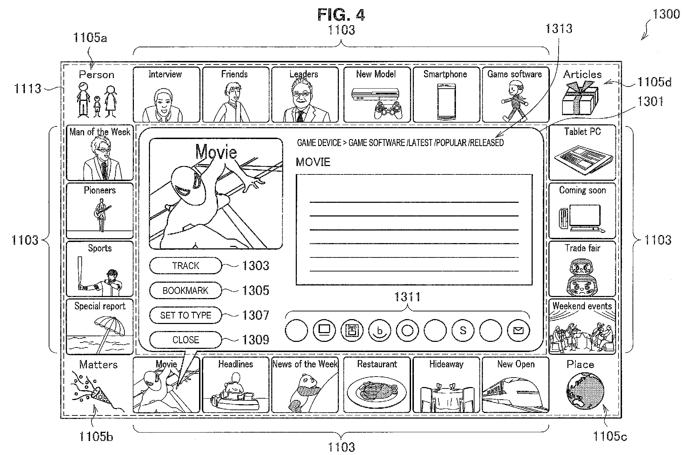

FIG. 4 is a third example of a display screen of the terminal apparatus according to the first embodiment of the present disclosure. Detailed information 1301 is displayed on the display screen, in the case where an associated content icon 1103 shown by the above described first and second examples is selected.

The detailed information 1301 includes images, text or the like showing the details of the content. Besides this, for example, the detailed information may include a tracking button 1303, a bookmark button 1305, a seed setting button 1307, a closing button 1309, function icons 1311 and an associated history 1313.

For example, the tracking button 1303 and the bookmark button 1305 may be buttons similar to the operation icons 1109g and 1109h described above in the first embodiment. That is, when the tracking button 1303 is pressed, the content displayed by the detailed information 1301 is tracked. For example, if the content displayed by the detailed information 1301 is release information of a product, information such as the determination of a release date of this product or an update notification of software may be automatically acquired. Further, content related to the tracked content may be preferentially displayed as an associated content icon 1103, at the time of a search of the associated content thereafter.

On the other hand, when the bookmark button 1305 is pressed, the content displayed by the detailed information 1301, the seed content, association content and content history at this time are saved. The saved destination may be the terminal apparatus 100 or may be a server on a network. In the case where the saved destination is a server on a network, for example, in the case where a service is used by another terminal apparatus by having a user use the same user account, browsing of the content can be re-opened from a state of the association at this time.

The seed setting button 1307 is a button for re-opening the search of associated content by setting the content displayed by the detailed information 1301 to new seed content. On the other hand, the closing button 1309 is a button for returning to a state prior to the detailed information 1301 being displayed. In the case where the closing button 1309 is pressed, the content displayed by the detailed information 1301 returns to the associated content icons 1103, and the seed content icon 1101 displayed prior to the detailed information 1301 being displayed is displayed again.

The function icons 1311 are icons similar to the function icons 1201 displayed by the above described second example. That is, the function icons 1311 show functions capable of being executed for the content displayed by the detailed information 1301. In the illustrated example, the function icons 1311a, 1311b, 1311d, 1311f, 1311h and 1311i corresponding to the functions capable of being executed for the content displayed by the detailed information 1301 are enabled and displayed (icons are displayed within circles), from among the function icons 1311. On the other hand, the function icons 1311c, 1311e and 1311g corresponding to the functions not capable of being executed for the content displayed by the detailed information 1301, even though they are capable of being executed by the terminal apparatus 100, are disabled and displayed (icons are not displayed within circles), from among the function icons 1311.

The associated history 1313 is displayed by the process of association, up to when the content displayed by the detailed information 1301 is displayed as the associated content icons 1103. In the illustrated example, first, associated content for a "game device" is searched for, and as a result of finding associated content based on the definition of the relationship of "game software/ latest/ popular/ released" from among this, the associated history 1313 shows that the content displayed by the detailed information 1301 has reached being displayed as the associated content icons 1103.

### (1-3. Example of the process flow)

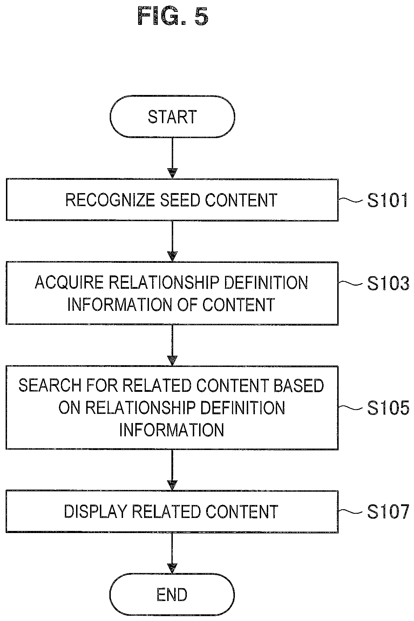

FIG. 5 is a flow chart which shows an example of a content search process in the first embodiment of the present disclosure. Hereinafter, the processes will be shown in the case where content by some operation of a user is set to the seed content, in the terminal apparatus 100.

First, the seed content is recognized (step S101). As described above, the seed content may be set by dragging an associated content icon 1103 on the GUI from the associated region 1113 up to the seed region 1111, or may be set by a selection of content files, an input of audio, images, text or the like by a user. The content search section 140 recognizes the seed content from an input such as that described above, for example.

Next, the content search section 140 acquires relationship definition information of the seed content (step S103). The relationship definition information is attached to the content itself, for example, as meta-information of the seed content, or is stored in a database associated with information identifying the content.

Next, the content search section 140 searches for related content, based on the relationship definition information (step S105). The related content searched here is the content called associated content in the above described example of the display screen.

Next, the content search section 140 presents information of the related content which has been found to the display control section 130, and the display control section 130 causes the related content to be displayed on the display section 110 (step S107).

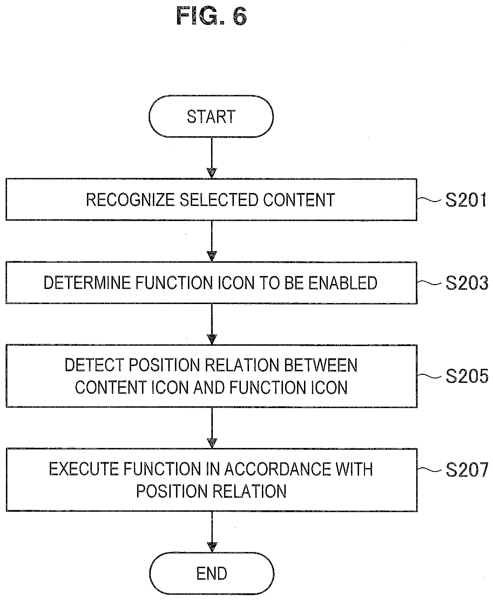

FIG. 6 is a flow chart which shows an example of a function execution process in the first embodiment of the present disclosure. Hereinafter, the processes will be shown in the case where a user causes a content icon to move up to the function region 1203 by a drag operation, in the terminal apparatus 100.

First, selected content, that is, content which becomes a target of the drag operation, is recognized (step S201). As described above, the content which may become a target here is the seed content or associated content displayed as a content icon.

Next, the function icons to be enabled are determined (step S203). As described above, in the present embodiment, icons corresponding to functions capable of being executed for the selected content are enabled and displayed, from among the function icons 1201 displayed as a GUI on the display section 110. The display control section 130 specifies the functions capable of being executed for the selected content by requesting to the function search section 150, and causes the function icons 1201 to be enabled and displayed.

Next, the display control section 130 detects a position relation between the content icon and a function icon (step S205), and executes a function in accordance with the detected position relation (step S207). In the present embodiment, when the drag operation of the content icon to there is finished, at the time when the position relation between the content icon and the function icon becomes a prescribed relation (at the time when being superimposed in the above described example), the function corresponding to the function icon is executed. At this time, the display control section 130 requests the execution of the function to the function execution control section 160.

### (1-4. Conclusion)

According to the first embodiment of the present disclosure such as described above, a content search process for providing various content based on a relationship between content for users (a relationship nearer to the recognition of the users), a GUI for smoothly browsing various content presented one after another, and in the case where it is intended to execute some function related to content by a user, a GUI in which the functions capable of being executed can be easily recognized or in which executing this function is prepared, are implemented.

### (2. Second embodiment)

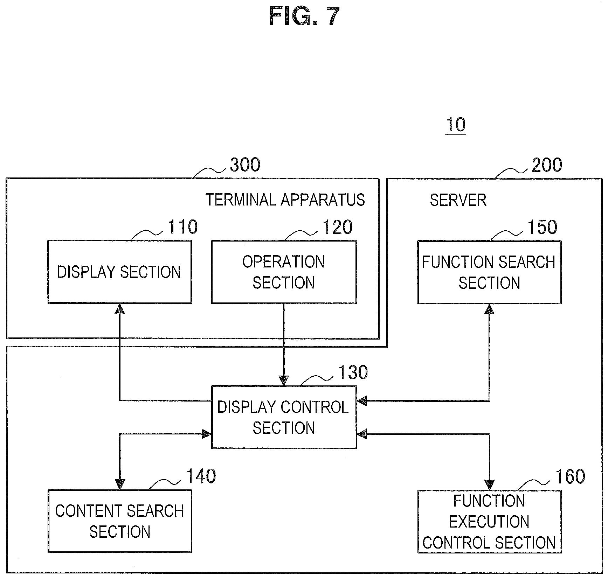

Next, a second embodiment of the present disclosure will be described by referring to FIG. 7.

FIG. 7 is a block diagram which shows a schematic functional configuration of a system according to the second embodiment of the present disclosure. A system 10 includes a server 200 and a terminal apparatus 300. The server 200 includes a display control section 130, a content search section 140, a function search section 150 and a function execution control section 160, and the terminal apparatus 100 includes a display section 110 and an operation section 120.

As illustrated, in the present embodiment, the elements described as the functional configuration implemented by the terminal apparatus in the above described first embodiment are implemented by being distributed to the server and the terminal apparatus. For example, the present embodiment corresponds to the case where a part of the processes for providing functions in the terminal apparatus are executed by the server, in a so-called cloud computing environment or the like. What functional configuration is implemented by the terminal apparatus and what functional configuration is implemented by the server is capable of being arbitrarily set without being limited to that of the illustrated example. For example, the display control section 130 may be implemented by the terminal apparatus 300. Further, the content search section 140, the function search section 150 or the function execution control section 160 may be implemented by the terminal apparatus 300.

The server 200 may be implemented by a single server apparatus, or may be implemented by having a plurality of server apparatuses mutually connected by various types of wired or wireless networks cooperating with each other. The individual server apparatuses may be implemented by a hardware configuration of an information processing apparatus, which will be described later. The server 200 and the terminal apparatus 300 are connected by various types of wired or wireless networks.

### (3. Hardware Configuration)

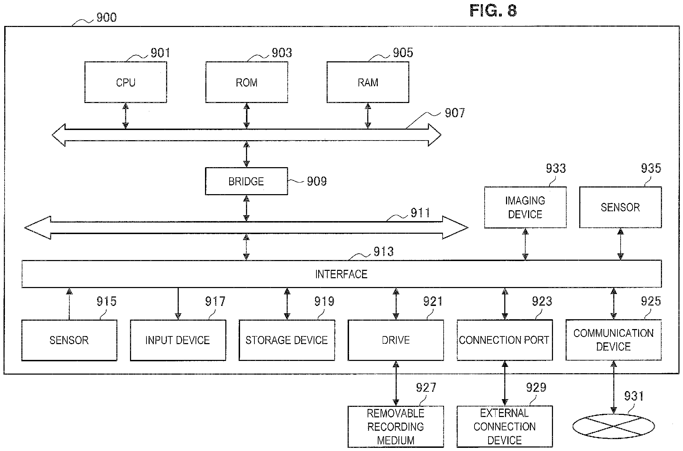

Next, with reference to FIG. 8, a hardware configuration of an information processing apparatus according to an embodiment of the present disclosure will be described. FIG. 8 is a block diagram showing a hardware configuration of an information processing apparatus. An information processing apparatus 900 which is shown may achieve the terminal apparatus and the server in the above described embodiments, for example.

The information processing apparatus 900 includes a central processing unit (CPU) 901, read only memory (ROM) 903, and random access memory (RAM) 905. Further, the information processing apparatus 900 may also include a host bus 907, a bridge 909, an external bus 911, an interface 913, an input device 915, an output device 917, a storage device 919, a drive 921, a connection port 923, and a communication device 925. Furthermore, the information processing apparatus 900 may include an imaging device 933 and a sensor 935 as necessary. The information processing apparatus 900 may also include, instead of or along with the CPU 901, a processing circuit such as a digital signal processor (DSP).

The CPU 901 functions as an arithmetic processing unit and a control unit and controls an entire operation or a part of the operation of the information processing apparatus 900 according to various programs recorded in the ROM 903, the RAM 905, the storage device 919, or a removable recording medium 927. The ROM 903 stores programs and arithmetic parameters used by the CPU 901. The RAM 905 primarily stores programs used in execution of the CPU 901 and parameters and the like varying as appropriate during the execution. The CPU 901, the ROM 903, and the RAM 905 are connected to each other via the host bus 907 configured from an internal bus such as a CPU bus or the like. In addition, the host bus 907 is connected to the external bus 911 such as a peripheral component interconnect/interface (PCI) bus via the bridge 909.

The input device 915 is a device operated by a user, such as a mouse, a keyboard, a touch panel, buttons, a switch, and a lever. Also, the input device 915 may be a remote control device using, for example, infrared light or other radio waves, or may be an external connection device 929 such as a cell phone compatible with the operation of the information processing apparatus 900. The input device 915 includes an input control circuit that generates an input signal on the basis of information input by the user and outputs the input signal to the CPU 901. The user inputs various kinds of data to the information processing apparatus 900 and instructs the information processing apparatus 900 to perform a processing operation by operating the input device 915.

The output device 917 is configured from a device capable of visually or aurally notifying the user of acquired information. For example, the output device 917 may be: a display device such as a liquid crystal display (LCD), a plasma display panel (PDP), or an organic electro-luminescence (EL) display; an audio output device such as a speaker or headphones; or a printer. The output device 917 outputs results obtained by the processing performed by the information processing apparatus 900 as video in the form of text or an image or as audio in the form of audio or sound.

The storage device 919 is a device for storing data configured as an example of a storage unit of the information processing apparatus 900. The storage device 919 is configured from, for example, a magnetic storage device such as a hard disk drive (HDD), a semiconductor storage device, an optical storage device, or a magneto-optical storage device. This storage device 919 stores programs to be executed by the CPU 901, various data, and various data obtained from the outside.

The drive 921 is a reader/writer for the removable recording medium 927 such as a magnetic disk, an optical disc, a magneto-optical disk, or a semiconductor memory, and is built in or externally attached to the information processing apparatus 900. The drive 921 reads out information recorded on the attached removable recording medium 927, and outputs the information to the RAM 905. Further, the drive 921 writes the record on the attached removable recording medium 927.

The connection port 923 is a port for allowing devices to directly connect to the information processing apparatus 900. Examples of the connection port 923 include a universal serial bus (USB) port, an IEEE1394 port, and a small computer system interface (SCSI) port. Other examples of the connection port 923 may include an RS-232C port, an optical audio terminal, and a high-definition multimedia interface (HDMI) port. The connection of the external connection device 929 to the connection port 923 may enable the various data exchange between the information processing apparatus 900 and the external connection device 929.

The communication device 925 is a communication interface configured from, for example, a communication device for establishing a connection to a communication network 931. The communication device 925 is, for example, a wired or wireless local area network (LAN), Bluetooth (registered trademark), a communication card for wireless USB (WUSB), or the like. Alternatively, the communication device 925 may be a router for optical communication, a router for asymmetric digital subscriber line (ADSL), a modem for various communications, or the like. The communication device 925 can transmit and receive signals and the like using a certain protocol such as TCP/IP on the Internet and with other communication devices, for example. The communication network 931 connected to the communication device 925 is configured from a network which is connected via wire or wirelessly and is, for example, the Internet, a home-use LAN, infrared communication, radio wave communication, and satellite communication.

The imaging device 933 is a device which images a real space by use of various members including an image sensor such as a charge coupled device (CCD) or a complementary metal oxide semiconductor (CMOS) and a lens for controlling image formation of a subject on the image sensor, and generates a pickup image. The imaging device 933 may image a still image or a moving image.

The sensor 935 is any of various sensors such as an acceleration sensor, a gyro sensor, a magnetic field sensor, an optical sensor, and a sound sensor. For example, the sensor 935 acquires information related to the state of the information processing apparatus 900 itself, such as the posture of the housing of the information processing apparatus 900, or information related to the peripheral environment of the information processing apparatus 900, such as the brightness or noise around the information processing apparatus 900. Further, the sensor 935 may include a global positioning system (GPS) sensor which measures the latitude, the longitude, and the altitude of the apparatus by receiving a GPS signal.

Heretofore, an example of the hardware configuration of the information processing apparatus 900 has been shown. Each of the structural elements described above may be configured using a general-purpose material, or may be configured from hardware dedicated to the function of each structural element. The configuration may be changed as appropriate according to the technical level at the time of carrying out embodiments.

### (4. Supplementary Explanation)

Embodiments of the present disclosure may include, for example, the above described information processing apparatus (terminal apparatus or server), a system, an information processing method used for an information processing apparatus or a system, a program for causing an information processing apparatus to function, and a recording medium on which a program is recorded.

The preferred embodiments of the present invention have been described above with reference to the accompanying drawings, whilst the present invention is not limited to the above examples, of course. A person skilled in the art may find various alterations and modifications within the scope of the appended claims, and it should be understood that they will naturally come under the technical scope of the present invention.

## Claims

1. An information processing apparatus comprising:
a function search section (150) which searches for a function (1201) capable of being executed for specified content (1103a), from a function group including a function capable of being executed in the case where content has a specific attribute or detail;
a display control section (130) which causes content icons (1103) showing the content to be displayed on a display section (110), and in the case where one (1103a) of the content icons (1103) is selected by a user, the display control section (110) causes a function icon group (1201) corresponding to the function group to be displayed in a first region (1203) on the display section, and causes a function icon (1201a, 1201b, 1201d, 1201f, 1201h, 1201i) to be enabled and displayed, from among the function icon group (1201), which corresponds to a function capable of being executed for content corresponding to the selected content icon (1103a); and
a function execution control section (160) which causes a function to be executed which corresponds to the function icon for content corresponding to the selected content icon (1103a) in accordance with a position relation between the selected content icon (1103a) and the enabled and displayed function icon (1201b) on the display section (110), the information processing apparatus being **characterized by** comprising:
a content search section (140) which, in the case where the selected content icon (1103a) has moved to a second region (1111) on the display section (110), searches for related content based on an attribute or detail of content corresponding to the selected content icon,
wherein, in the case where the related content is found, the display control section (130) updates a display of the content icons (1103) with content icons (1103) that display content found by the content search section (140).

2. The information processing apparatus according to claim 1,
wherein the content search section (140) searches for the related content based on relationship definition information which defines a relationship of an attribute or detail of the content.

3. The information processing apparatus according to claim 2,
wherein the relationship definition information is personalized for each of the users, and/or
wherein the relationship definition information defines the relationship based on a personalized relationship of the users, and/or
wherein the relationship definition information is generated for each user category set based on an attribute or preference of the user, and/or
wherein the relationship definition information defines the relationship based on a browsing history of the content by a user, and/or
wherein the relationship definition information defines the relationship based on a quantitative indicator included in an attribute or detail of the content.

4. The information processing apparatus according to claim 3,
wherein the content search section (140) searches for content which the users are able to access by the personalized relationship as the related content.

5. The information processing apparatus according to anyone of claims 1 to 4,
wherein the content icons (1103) are classified into categories (1105) and displayed at least in part, and same content icons are classified into the categories that are different according to attributes or preferences of the user.

6. The information processing apparatus according to anyone of claims 1 to 5,
wherein the display control section (130) causes the content icon to be displayed on a third region positioned around the second region.

7. The information processing apparatus according to claim 6,
wherein the first region (1203) is positioned between the second region (1111) and the third region (1113).

8. The information processing apparatus according to anyone of claims 1 to 7,
wherein the function search section (150) searches for the function capable of being executed in accordance with a device owned by the user.

9. The information processing apparatus according to anyone of claims 1 to 8,
wherein, in the case where the selected content icon (1103a) is superimposed on the enabled and displayed function icon (1201b), the function execution control section (160) causes a function to be executed which corresponds to the function icon (1201b).

10. The information processing apparatus according to anyone of claims 1 to 9,
wherein the function execution control section (160) selects a function which corresponds to the function icon (1201a, 1201b, 1201d, 1201f, 1201h, 1201i) in accordance with a type of the selected content icon.

11. The information processing apparatus according to claim 10,
wherein the function icon (1201a, 1201b, 1201d, 1201f, 1201h, 1201i) includes a first icon which displays a social network service (1201d), and
wherein the function execution control section (160), in the case where the selected content icon is a contribution of a social network service, selects a reply to the contribution as a function which corresponds to the first icon, and in the case where the selected content icon is other than the contribution, the function execution control section (160) selects sharing content corresponding to the selected content icon by the social network service as a function which corresponds to the first icon.

12. The information processing apparatus according to anyone of claims 1 to 11, further comprising:
a display section (110),
wherein the display control section (130) causes the content icon (1103) and the function icon group (1201) to be displayed on the display section (110).

13. The information processing apparatus according to anyone of claims 1 to 11, further comprising:
a communication section (925) which communicates with a terminal apparatus,
wherein the display control section (130) causes the content icon and the function icon group to be displayed on a display section (110) of the terminal apparatus.

14. A program causing a computer to execute:
a procedure which searches for a function (1201) capable of being executed for specified content (1103a), from a function group including a function capable of being executed in the case where content has a specific attribute or detail;
a procedure which causes content icons (1103) showing the content to be displayed on a display section (110), and in the case where one (1103a) of the content icons (1103) is selected by a user, causes a function icon group (1201) corresponding to the function group to be displayed in a first region (1203) on the display section (110), and causes a function icon (1201a, 1201b, 1201d, 1201f, 1201h, 1201i) to be enabled and displayed, from among the function icon group, which corresponds to a function capable of being executed for content corresponding to the selected content icon (1103a); and
a procedure which causes a function to be executed which corresponds to the function icon for content corresponding to the selected content icon (1103a) in accordance with a position relation between the selected content icon and the enabled and displayed function icon (1201b) on the display section (110);
a procedure which, in the case where the selected content icon (1103a) has moved to a second region (1111) on the display section (110), searches for related content based on an attribute or detail of content corresponding to the selected content icon (1103a),
wherein, in the case where the related content is found, the display control section (130) updates a display of the content icon.

## Patentansprüche

1. Informationsverarbeitungsvorrichtung, umfassend:
einen Funktionssuchabschnitt (150), der nach einer Funktion (1201), die imstande ist, für spezifizierten Inhalt (1103a) ausgeführt zu werden, aus einer Funktionsgruppe sucht, die eine Funktion enthält, die imstande ist, in dem Fall ausgeführt zu werden, in dem Inhalt ein spezifisches Attribut oder Detail aufweist;
einen Anzeigesteuerabschnitt (130), der bewirkt, dass Inhaltssymbole (1103), die den Inhalt zeigen, auf einem Anzeigeabschnitt (110) angezeigt werden, und in dem Fall, in dem eines (1103a) der Inhaltssymbole (1103) durch einen Benutzer ausgewählt wird, bewirkt der Anzeigesteuerabschnitt (110), dass eine Funktionssymbolgruppe (1201) korrespondierend mit der Funktionsgruppe in einer erster Region (1203) auf dem Anzeigeabschnitt angezeigt wird, und bewirkt, dass ein Funktionssymbol (1201a, 1201b, 1201d, 1201f, 1201h, 1201i) aus der Funktionssymbolgruppe (1201), das mit einer Funktion korrespondiert, die imstande ist, für Inhalt korrespondierend mit dem ausgewählten Inhaltssymbol (1103a) ausgeführt zu werden, freigegeben und angezeigt wird; und
einen Funktionsausführungssteuerabschnitt (160), der bewirkt, dass eine Funktion ausgeführt wird, die mit dem Funktionssymbol für Inhalt korrespondierend mit dem ausgewählten Inhaltssymbol (1103a) gemäß einem Positionsverhältnis zwischen dem ausgewählten Inhaltssymbol (1103a) und dem freigegebenen und angezeigten Funktionssymbol (1201b) auf dem Anzeigeabschnitt (110) korrespondiert, wobei die Informationsverarbeitungsvorrichtung **dadurch gekennzeichnet ist, dass** sie umfasst:
einen Inhaltssuchabschnitt (140), der in dem Fall, in dem das ausgewählte Inhaltssymbol (1103a) sich zu einer zweiten Region (1111) auf dem Anzeigeabschnitt (110) bewegt hat, nach in Beziehung stehendem Inhalt basierend auf einem Attribut oder Detail des Inhalts korrespondierend mit dem angezeigten Inhaltssymbol sucht,
wobei in dem Fall, in dem der in Beziehung stehende Inhalt gefunden wird, der Anzeigesteuerabschnitt (130) eine Anzeige der Inhaltssymbole (1103) mit Inhaltssymbolen (1103), die durch den Inhaltssuchabschnitt (140) gefundenen Inhalt anzeigen, aktualisiert.

2. Informationsverarbeitungsvorrichtung nach Anspruch 1,
wobei der Inhaltssuchabschnitt (140) nach dem in Beziehung stehenden Inhalt basierend auf Beziehungsdefinitionsinformationen, die ein Verhältnis eines Attributs oder Details des Inhalts definieren, sucht.

3. Informationsverarbeitungsvorrichtung nach Anspruch 2,
wobei die Beziehungsdefinitionsinformationen für jeden der Benutzer personalisiert sind, und/oder
wobei die Beziehungsdefinitionsinformationen die Beziehung basierend auf einer personalisierten Beziehung der Benutzer definieren, und/oder
wobei die Beziehungsdefinitionsinformationen für jede Benutzerkategorienmenge basierend auf einem Attribut oder einer Präferenz des Benutzers erzeugt werden, und/oder
wobei die Beziehungsdefinitionsinformationen die Beziehung basierend auf einem Verlauf des Durchsuchens des Inhalts durch einen Benutzer definieren, und/oder
wobei die Beziehungsdefinitionsinformationen die Beziehung basierend auf einer quantitativen Angabe, die in einem Attribut oder Detail des Inhalts enthalten ist, definieren.

4. Informationsverarbeitungsvorrichtung nach Anspruch 3,
wobei der Inhaltssuchabschnitt (140) nach Inhalt sucht, auf den die Benutzer durch die personalisierte Beziehung als den in Beziehung stehenden Inhalt zugreifen können.

5. Informationsverarbeitungsvorrichtung nach einem der Ansprüche 1 bis 4,
wobei die Inhaltssymbole (1103) in Kategorien (1105) klassifiziert und mindestens teilweise angezeigt werden und gleiche Inhaltssymbole in die Kategorien klassifiziert werden, die gemäß Attributen oder Präferenzen des Benutzers verschieden sind.

6. Informationsverarbeitungsvorrichtung nach einem der Ansprüche 1 bis 5,
wobei der Anzeigesteuerabschnitt (130) bewirkt, dass das Inhaltssymbol auf einer dritten Region, die um der zweiten Region positioniert ist, angezeigt wird.

7. Informationsverarbeitungsvorrichtung nach Anspruch 6,
wobei die erste Region (1203) zwischen der zweiten Region (1111) und der dritten Region (1113) positioniert ist.

8. Informationsverarbeitungsvorrichtung nach einem der Ansprüche 1 bis 7,
wobei der Funktionssuchabschnitt (150) nach der Funktion sucht, die imstande ist, gemäß einer im Besitz des Benutzers befindlichen Vorrichtung ausgeführt zu werden.

9. Informationsverarbeitungsvorrichtung nach einem der Ansprüche 1 bis 8,
wobei in dem Fall, in dem das ausgewählte Inhaltssymbol (1103a) dem freigegebenen und angezeigten Funktionssymbol (1201) überlagert wird, der Funktionsausführungssteuerabschnitt (160) bewirkt, dass eine Funktion ausgeführt wird, die mit dem Funktionssymbol (1201b) korrespondiert.

10. Informationsverarbeitungsvorrichtung nach einem der Ansprüche 1 bis 9,
wobei der Funktionsausführungssteuerabschnitt (160) eine Funktion auswählt, die mit dem Funktionssymbol (1201a, 1201b, 1201d, 1201f, 1201h, 1201i) gemäß einem Typ des ausgewählten Inhaltssymbols korrespondiert.

11. Informationsverarbeitungsvorrichtung nach Anspruch 10,
wobei das Funktionssymbol (1201a, 1201b, 1201d, 1201f, 1201h, 1201i) ein erstes Symbol enthält, das einen Dienst eines sozialen Netzwerks (1201d) anzeigt, und
wobei der Funktionsausführungssteuerabschnitt (160) in dem Fall, in dem das ausgewählte Inhaltssymbol ein Beitrag eines Dienstes eines sozialen Netzwerks ist, eine Antwort auf den Beitrag als eine Funktion auswählt, der mit dem ersten Symbol korrespondiert, und in dem Fall, in dem das ausgewählte Inhaltssymbol anders als der Beitrag ist, der Funktionsausführungssteuerabschnitt (160) auswählt, Inhalt korrespondierend mit dem durch den Dienst des sozialen Netzwerks ausgewählten Inhalt als eine Funktion, die mit dem ersten Symbol korrespondiert, gemeinsam zu nutzen.

12. Informationsverarbeitungsvorrichtung nach einem der Ansprüche 1 bis 11, ferner umfassend:
einen Anzeigeabschnitt (110),
wobei der Anzeigesteuerabschnitt (130) bewirkt, dass das Inhaltssymbol (1103) und die Funktionssymbolgruppe (1201) auf dem Anzeigeabschnitt (110) angezeigt werden.

13. Informationsverarbeitungsvorrichtung nach einem der Ansprüche 1 bis 11, ferner umfassend:
einen Kommunikationsabschnitt (925), der mit einer Endgerätevorrichtung kommuniziert,
wobei der Anzeigesteuerabschnitt (130) bewirkt, dass das Inhaltssymbol und die Funktionssymbolgruppe auf einem Anzeigeabschnitt (110) der Endgerätevorrichtung angezeigt werden.

14. Programm, das bewirkt, dass ein Computer Folgendes ausführt:
eine Prozedur, die nach einer Funktion (1201), die imstande ist, für spezifizierten Inhalt (1103a) ausgeführt zu werden, aus einer Funktionsgruppe sucht, die eine Funktion enthält, die imstande ist, in dem Fall ausgeführt zu werden, in dem Inhalt ein spezifisches Attribut oder Detail aufweist;
eine Prozedur, die bewirkt, dass Inhaltssymbole (1103), die den Inhalt zeigen, auf einem Anzeigeabschnitt (110) angezeigt werden, und in dem Fall, in dem eines (1103a) der Inhaltssymbole (1103) durch einen Benutzer ausgewählt wird, bewirkt, dass eine Funktionssymbolgruppe (1201) korrespondierend mit der Funktionsgruppe in einer erster Region (1203) auf dem Anzeigeabschnitt (110) angezeigt wird, und bewirkt, dass ein Funktionssymbol (1201a, 1201b, 1201d, 1201f, 1201h, 1201i) aus der Funktionssymbolgruppe, das mit einer Funktion korrespondiert, die imstande ist, für Inhalt korrespondierend mit dem ausgewählten Inhaltssymbol (1103a) ausgeführt zu werden, freigegeben und angezeigt wird; und
eine Prozedur, die bewirkt, dass eine Funktion ausgeführt wird, die mit dem Funktionssymbol für Inhalt korrespondierend mit dem ausgewählten Inhaltssymbol (1103a) gemäß einem Positionsverhältnis zwischen dem ausgewählten Inhaltssymbol und dem freigegebenen und angezeigten Funktionssymbol (1201b) auf dem Anzeigeabschnitt (110) korrespondiert;
eine Prozedur, die in dem Fall, in dem das ausgewählte Inhaltssymbol (1103a) sich zu einer zweiten Region (1111) auf dem Anzeigeabschnitt (110) bewegt hat, nach in Beziehung stehendem Inhalt basierend auf einem Attribut oder Detail des Inhalts korrespondierend mit dem angezeigten Inhaltssymbol (1103a) sucht,
wobei in dem Fall, in dem der in Beziehung stehende Inhalt gefunden wird, der Anzeigesteuerabschnitt (130) eine Anzeige des Inhaltssymbols aktualisiert.

## Revendications

1. Appareil de traitement d'informations, comprenant :
une section de recherche de fonction (150) qui recherche une fonction (1201) susceptible d'être exécutée pour un contenu spécifié (1103a) parmi un groupe de fonctions comportant une fonction susceptible d'être exécutée dans le cas où un contenu possède un attribut ou un détail spécifique ;
une section de commande d'affichage (130) qui fait s'afficher sur une section d'affichage (110) des icônes de contenu (1103) représentant le contenu et, dans le cas où l'une (1103a) des icônes de contenu (1103) est sélectionnée par un utilisateur, la section de commande d'affichage (110) fait s'afficher dans une première région (1203) sur la section d'affichage un groupe d'icônes de fonction (1201) correspondant au groupe de fonctions, et fait s'activer et s'afficher une icône de fonction (1201a, 1201b, 1201d, 1201f, 1201h, 1201i), parmi le groupe d'icônes de fonction (1201), correspondant à une fonction susceptible d'être exécutée pour un contenu correspondant à l'icône de contenu sélectionnée (1103a) ; et
une section de commande d'exécution de fonction (160) qui fait s'exécuter une fonction correspondant à l'icône de fonction pour un contenu correspondant à l'icône de contenu sélectionnée (1103a) conformément à une relation de position entre l'icône de contenu sélectionnée (1103a) et l'icône de fonction activée et affichée (1201b) sur la section d'affichage (110), l'appareil de traitement d'informations étant **caractérisé en ce qu'**il comprend :
une section de recherche de contenu (140) qui, dans le cas où l'icône de contenu sélectionnée (1103a) a été déplacée vers une deuxième région (1111) sur la section d'affichage (110), recherche un contenu associé en fonction d'un attribut ou d'un détail d'un contenu correspondant à l'icône de contenu sélectionnée,
dans lequel, dans le cas où le contenu associé est identifié, la section de commande d'affichage (130) met à jour un affichage des icônes de contenu (1103) par des icônes de contenu (1103) qui affichent un contenu identifié par la section de recherche de contenu (140).

2. Appareil de traitement d'informations selon la revendication 1,
dans lequel la section de recherche de contenu (140) recherche le contenu associé en fonction d'informations de définition de relation qui définissent une relation d'un attribut ou d'un détail du contenu.

3. Appareil de traitement d'informations selon la revendication 2,
dans lequel les informations de définition de relation sont personnalisées pour chacun des utilisateurs, et/ou
dans lequel les informations de définition de relation définissent la relation en fonction d'une relation personnalisée des utilisateurs, et/ou
dans lequel les informations de définition de relation sont générées pour chaque catégorie d'utilisateur établie en fonction d'un attribut ou d'une préférence de l'utilisateur, et/ou
dans lequel les informations de définition de relation définissent la relation en fonction d'un historique de navigation du contenu par un utilisateur, et/ou
dans lequel les informations de définition de relation définissent la relation en fonction d'un indicateur quantitatif compris dans un attribut ou un détail du contenu.

4. Appareil de traitement d'informations selon la revendication 3,
dans lequel la section de recherche de contenu (140) recherche, comme contenu associé, un contenu auquel les utilisateurs ont la possibilité d'accéder par la relation personnalisée.

5. Appareil de traitement d'informations selon l'une quelconque des revendications 1 à 4,
dans lequel les icônes de contenu (1103) sont classées en catégories (1105) et affichées au moins partiellement, et des icônes de contenu identiques sont classées dans les catégories qui diffèrent selon des attributs ou des préférences de l'utilisateur.

6. Appareil de traitement d'informations selon l'une quelconque des revendications 1 à 5,
dans lequel la section de commande d'affichage (130) fait s'afficher l'icône de contenu sur une troisième région se situant autour de la deuxième région.

7. Appareil de traitement d'informations selon la revendication 6,
dans lequel la première région (1203) se situe entre la deuxième région (1111) et la troisième région (1113).

8. Appareil de traitement d'informations selon l'une quelconque des revendications 1 à 7,
dans lequel la section de recherche de fonction (150) recherche la fonction susceptible d'être exécutée conformément à un dispositif détenu par l'utilisateur.

9. Appareil de traitement d'informations selon l'une quelconque des revendications 1 à 8,
dans lequel, dans le cas où l'icône de contenu sélectionnée (1103a) se superpose à l'icône de fonction activée et affichée (1201b), la section de commande d'exécution de fonction (160) fait s'exécuter une fonction correspondant à l'icône de fonction (1201b).

10. Appareil de traitement d'informations selon l'une quelconque des revendications 1 à 9,
dans lequel la section de commande d'exécution de fonction (160) sélectionne une fonction correspondant à l'icône de fonction (1201a, 1201b, 1201d, 1201f, 1201h, 1201i) conformément à un type de l'icône de contenu sélectionnée.

11. Appareil de traitement d'informations selon la revendication 10,
dans lequel l'icône de fonction (1201a, 1201b, 1201d, 1201f, 1201h, 1201i) comporte une première icône qui affiche un service de réseau social (1201d), et
dans lequel la section de commande d'exécution de fonction (160), dans le cas où l'icône de contenu sélectionnée est une contribution d'un service de réseau social, sélectionne une réponse à la contribution comme une fonction correspondant à la première icône et, dans le cas où l'icône de contenu sélectionnée est autre que la contribution, la section de commande d'exécution de fonction (160) sélectionne un contenu de partage correspondant à l'icône de contenu sélectionnée par le service de réseau social comme fonction correspondant à la première icône.

12. Appareil de traitement d'informations selon l'une quelconque des revendications 1 à 11, comprenant en outre :
une section d'affichage (110),
dans lequel la section de commande d'affichage (130) fait s'afficher sur la section d'affichage (110) l'icône de contenu (1103) et le groupe d'icônes de fonction (1201).

13. Appareil de traitement d'informations selon l'une quelconque des revendications 1 à 11, comprenant en outre :
une section de communication (925) qui communique avec un appareil terminal,
dans lequel la section de commande d'affichage (130) fait s'afficher sur une section d'affichage (110) de l'appareil terminal l'icône de contenu et le groupe d'icônes de fonction.

14. Programme amenant un ordinateur à exécuter :
une procédure qui recherche une fonction (1201) susceptible d'être exécutée pour un contenu spécifié (1103a) parmi un groupe de fonctions comportant une fonction susceptible d'être exécutée dans le cas où un contenu possède un attribut ou un détail spécifique ;
une procédure qui fait s'afficher sur une section d'affichage (110) des icônes de contenu (1103) représentant le contenu et, dans le cas où l'une (1103a) des icônes de contenu (1103) est sélectionnée par un utilisateur, qui fait s'afficher dans une première région (1203) sur la section d'affichage (110) un groupe d'icônes de fonction (1201) correspondant au groupe de fonctions, et qui fait s'activer et s'afficher une icône de fonction (1201a, 1201b, 1201d, 1201f, 1201h, 1201i), parmi le groupe d'icônes de fonction, correspondant à une fonction susceptible d'être exécutée pour un contenu correspondant à l'icône de contenu sélectionnée (1103a) ; et
une procédure qui fait s'exécuter une fonction correspondant à l'icône de fonction pour un contenu correspondant à l'icône de contenu sélectionnée (1103a) conformément à une relation de position entre l'icône de contenu sélectionnée et l'icône de fonction activée et affichée (1201b) sur la section d'affichage (110) ;
une procédure qui, dans le cas où l'icône de contenu sélectionnée (1103a) a été déplacée vers une deuxième région (1111) sur la section d'affichage (110), recherche un contenu associé en fonction d'un attribut ou d'un détail d'un contenu correspondant à l'icône de contenu sélectionnée (1103a),
dans lequel, dans le cas où le contenu associé est identifié, la section de commande d'affichage (130) met à jour un affichage de l'icône de contenu.
